Europäisches Patentamt

European Patent Office

Office européen des brevets

(19)

(11) Veröffentlichungsnummer: **0 015 545**
**B1**

(12) **EUROPÄISCHE PATENTSCHRIFT**

(45) Veröffentlichungstag der Patentschrift:
**01.12.82**

(21) Anmeldenummer: **80101110.7**

(22) Anmeldetag: **05.03.80**

(51) Int. Cl.³: **F 24 J 3/02**

(54) **Fassadenverkleidung.**

(30) Priorität: **06.03.79 AT 1680/79**

(43) Veröffentlichungstag der Anmeldung:
**17.09.80 Patentblatt 80/19**

(45) Bekanntmachung des Hinweises auf die Patenterteilung:
**01.12.82 Patentblatt 82/48**

(84) Benannte Vertragsstaaten:
**CH DE FR IT NL SE**

(56) Entgegenhaltungen:
**EP-A-0 000 543**
**DE-A-2 712 254**
**DE-A-2 712 532**
**DE-A-2 752 994**
**FR-A-2 367 994**

(73) Patentinhaber: **Vereinigte Metallwerke Ranshofen-Berndorf AG, Wohllebengasse 9, A-1041 Wien IV (AT)**

(72) Erfinder: **Grumböck, Günther, Harllesstrasse 1/6, A-2560 Berndorf (AT)**

(74) Vertreter: **Hain, Leonhard, Dipl.-Ing., Tal 18/IV, D-8000 München 2 (DE)**

## Fassadenverkleidung

Die Erfindung betrifft eine als Sonnenkollektor ausgebildete abdecklose Fassadenverkleidung mit in nach aussen omega-förmig gewölbten Sicken von Metallblechelementen eingedrückten Rohren für ein Wärmetauschmedium sowie mit einer wandseitig vorgesehenen Wärmedämmschicht.

Bei einer bekannten Fassadenverkleidung dieser Art (EP-A-0000543) sind die in nach aussen gewölbten Sicken von Metallblechelementen eingelegten Rohre für ein Wärmetauschmedium von einer Wärmedämmschicht gehalten, die auf die Blechbahn aufgespritzt oder aufgeklebt ist. Die Dämmstoffschicht bildet so einen festen Bestandteil jedes Elementes, das zudem mehrere Rohrzüge umfasst. Diese bekannten Elemente sind daher unhandlich und schwierig zu transportieren sowie zu montieren. Die abgedeckten Rohre können nach dem Aufbringen der Dämmstoffschicht auch keiner Kontrolle mehr auf ihre Dichtigkeit unterzogen werden. Eine notwendige Reparatur erfordert somit das Entfernen dieser Dämmschicht. Die einzelnen Elemente sind für einen wasserdichten Dachabschluss mittels eines ungebördelten Seitenrandes fest miteinander verbunden. Auch diese Verbindungsart erschwert die Montage und spätere Reparaturen.

Der Erfindung liegt daher die Aufgabe zugrunde, eine als Sonnenkollektor ausgebildete Fassadenverkleidung zu schaffen, die sich besonders leicht montieren, kontrollieren und gegebenenfalls auch reparieren lässt.

Zur Lösung dieser Aufgabe ist eine Fassadenverkleidung der eingangs genannten Art gemäss der Erfindung dadurch gekennzeichnet, dass die Metallblechelemente mit ihren Sicken auf vormontierten Rohren elastisch festsitzend, jedoch abnehmbar gehalten und deren Seitenränder wechselseitig mit zur Wandseite gerichteten ineinandergreifenden Nut- bzw. Federprofilen versehen sind.

Weitere Merkmale der Erfindung sind in Unteransprüchen beschrieben.

Die erfindungsgemässe Fassadenverkleidung, die aus vorgefertigten Einzelteilen besteht, lässt sich besonders leicht montieren, wozu zunächst die Isolierung bzw. Dämmschicht auf die Fassadenwand nach dem Befestigen der Auflattung aufgebracht, sodann das Rohrregister darauf verlegt und anschliessend die Metallblechelemente mit ihren Sicken auf die Rohre aufgeschnappt werden. Zur Reparatur müssen lediglich die Blechelemente abgenommen und eventuell ausgetauscht werden. Das Rohrregister ist dann frei zugänglich und kann auf Dichtigkeit gut kontrolliert werden. Diese Montage- und Reparaturerleichterung wird durch die Befestigungsart ermöglicht, wozu die Seitenränder der Metallblechelemente als ineinandergreifende Profile ausgebildet sind, und an der Oberfläche einer so gestalteten Fassade nur glatte Stösse mit lediglich schmalen Zwischenspalten zu sehen sind. Diese Seitenrandprofilierung ermöglicht es, die Fassadenelemente sowohl in Vertikal- als auch in Horizontalrichtung zu verlegen. In beiden Fällen ist ein ausreichender Wind- und Wasserschutz gegeben. Das Aussehen einer solchen Fassade ist sehr ansprechend, zumal die Wandbefestigung der Elemente nicht sichtbar ist.

In der Zeichnung ist die Erfindung beispielsweise dargestellt. Es zeigen:

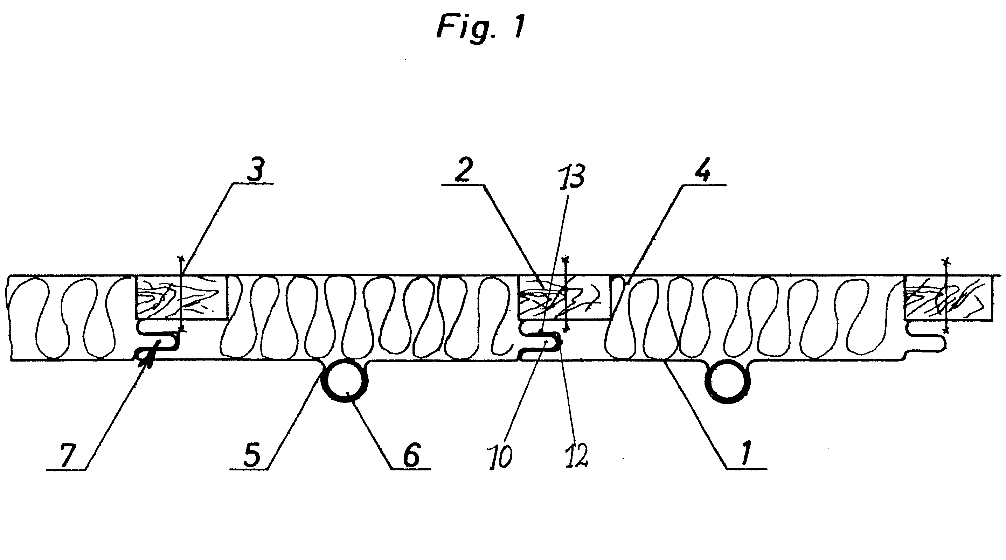

Fig. 1 einen Querschnitt durch die Fassadenverkleidung,
Fig. 2 eine Draufsicht hierzu, und
Fig. 3 ebenfalls einen Querschnitt.

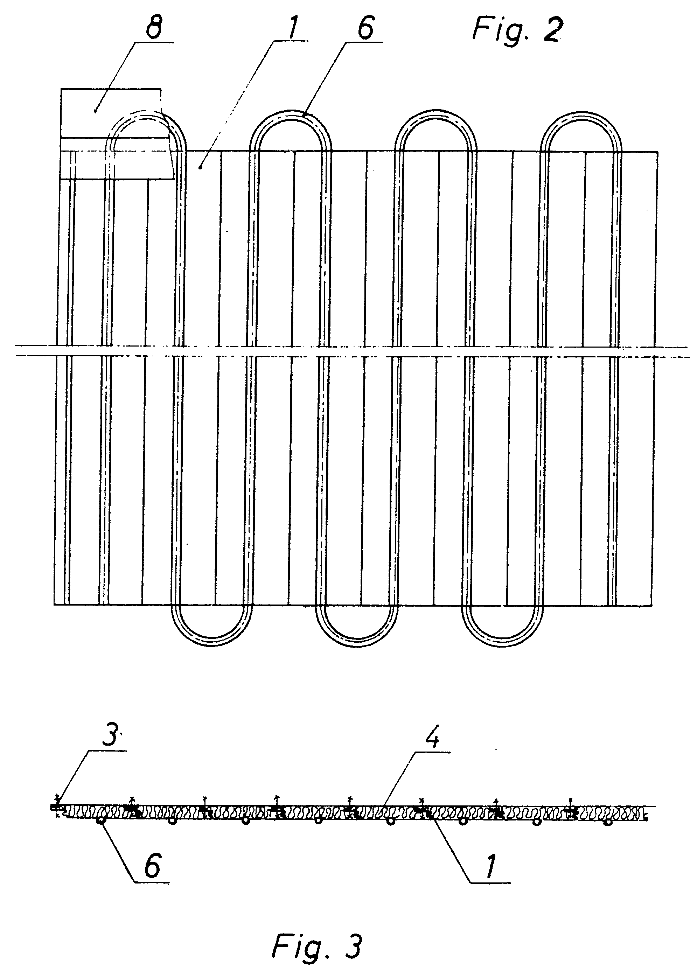

Wie man aus der Zeichnung ersehen kann, sind aus lackiertem Aluminiumblech rollgeformte profilierte Blechelemente 1 (sidings) mit Nägeln 3 oder Schrauben an einer am Rohrmauerwerk befestigten Auflattung 2 angebracht. Diese Blechelemente greifen mit ihren profilierten Seitenrändern 7 ineinander, so dass kein Schlagregen dahinter eindringen kann. Zu diesem Zweck und zur Erleichterung der Montage sowie Reparaturen sind diese Seitenränder 7 wechselseitig mit zur Wandseite gerichteten ineinandergreifenden Nut- bzw. Federprofilen 12 bzw. 10 versehen, wobei das Nutprofil 12 einen frei auslaufenden Innenschenkel 13 aufweisen kann. Der Zwischenraum wird mit einer Wärmedämmschicht 4 in Form von Glaswolle oder Schaumkunststoffplatten ausgefüllt. Ihre Funktion als Sonnenkollektor erhalten die Blechelemente 1 durch nach der Aussenseite ausgebauchte Sicken 5, die die Rohre 6 aus Metall (Kupfer) oder Kunststoff aufnehmen und zu mehr als der Hälfte umschliessen, so dass die Rohre elastisch in den Sicken festgehalten sind. Die Rohre sind an den Enden entweder zu einer Rohrschlange gebogen (Fig. 2) oder werden mit Kurvenstücken miteinander verbunden. Bei den einzelnen Bögen werden die Rohre zusätzlich an der Wand befestigt und das ganze wird mit einer Abdeckung 8 verschlossen. Die Rohre können selbstverständlich auch als Rohrregister an Sammelrohre angeschlossen sein, wobei die Blechelemente und Rohre sowohl in Vertikal- als auch Horizontalrichtung verlaufen können, da in jedem Fall die Blechelemente 1 die auf sie eingestrahlte Sonnenwärme aufnehmen und an die Rohre 6 weiterleiten. Von aussen sind nur die Sicken 5 sichtbar, während die Rohre zur Gänze unsichtbar innerhalb der Verkleidung liegen und daher nicht den Witterungseinflüssen und der UV-Strahlung ausgesetzt sind.

Sollten die erzielbaren Temperaturen infolge der mangelnden Abdeckung der Fassadenverkleidung zu niedrig sein, so kann das System mit einer Wärmepumpe kombiniert werden, um die aufgefangene Niedertemperaturwärme auf das gewünschte höhere Niveau zu bringen. Durch die grossen Flächen der Fassade kann auf jeden Fall genügend Wärme eingefangen werden, wobei sich im Sommer zusätzlich eine kühlende Wirkung für die Hausmauer ergibt.

## Patentansprüche

1. Als Sonnenkollektor ausgebildete abdecklose Fassadenverkleidung mit in nach aussen omega-förmig gewölbten Sicken (5) von Metallblechelementen (1) eingedrückten Rohren (6) für ein Wärmetauschmedium sowie mit einer wandseitig vorgesehenen Wärmedämmschicht (4), dadurch gekennzeichnet, dass die Metallblechelemente (1) mit ihren Sicken (5) auf vormontierten Rohren (6) elastisch festsitzend, jedoch abnehmbar gehalten und deren Seitenränder (7) wechselseitig mit zur Wandseite gerichteten ineinandergreifenden Nut- bzw. Federprofilen (12 bzw. 10) versehen sind.

2. Fassadenverkleidung nach Anspruch 1, dadurch gekennzeichnet, dass das Nutprofil (12) einen frei auslaufenden Innenschenkel (13) aufweist.

3. Fassadenverkleidung nach einem der beiden Ansprüche 1 oder 2, dadurch gekennzeichnet, dass jedes Metallblechelement (1) nur eine gewölbte Sicke (5) aufweist.

## Claims

1. Unmasked exterior wall cladding formed as sun collector, the cladding having pipes (6) for a heat exchanging medium, the pipes being pressed into beads (5) of metal plate elements (1), the beads being arched outwardly in omega shaped form, and having a heat insultating layer (4) which faces the wall, characterized in that the metal plate elements (1) with their beads (5) are arranged elastically attached on premounted pipes (6) but removable (detachable), and that their side edges (7) are alternately (mutually) provided with interengaging (interlocking) grooved or spring profiles (12 or 10) which face the wall.

2. Exterior wall cladding according to claim 1, characterized in that the grooved profile (12) comprises a freely extending interior leg (13).

3. Exterior wall cladding according to claim 1 or 2, characterized in that each metal plate element (1) shows only one arched bead (5).

## Revendications

1. Revêtement de façade sans recouvrement réalisé sous forme de collecteur solaire avec des tubes (6) enfoncés dans des moulures (5) d'éléments (1) en tôle métallique cintrées en forme d'oméga vers l'extérieur, prévus pour un fluide échangeur de chaleur, ainsi qu'avec une couche calorifuge (4) prévue côté mur, caractérisé par le fait que les éléments (1) en tôle métallique sont retenus par leurs moulures (5) sur des tubes (6) montés d'avance de manière à bénéficier d'une assise stable et élastique et être pourtant amovibles, et que leurs bords latéraux (7) sont munis alternativement, l'un d'un profil en rainure, l'autre d'un profil en languette (12, respectivement 10) venant en prise l'un dans l'autre et orientés vers le côté du mur.

2. Revêtement de façade suivant la revendication 1, caractérisé par le fait que le profil en rainure (12) présente une aile intérieure (13) s'étendant et se terminant librement.

3. Revêtement de façade suivant l'une des revendications 1 ou 2, caractérisé par le fait que chaque élément (1) en tôle métallique ne présente qu'une seule moulure (5) cintrée.

Fig. 1

0 015 545

8     1     6     *Fig. 2*

3            4

6           1

*Fig. 3*